# EUROPEAN PATENT APPLICATION

(11) **EP 4 282 602 A1**
(43) Date of publication of application: **29.11.2023**
(21) Application number: 22742766.3
(22) Date of filing: 13.01.2022
(51) Int. Cl.: B25J 11/00, B25J 18/00, B25J 9/00, B25J 9/10, B25J 9/16, B25J 19/02

(54) **COOPERATIVE ROBOT HAVING IMPROVED ARM STRUCTURE AND METHOD FOR CONTROLLING SAME**

(30) Priority: 19.01.2021 KR 20210007679
(71) Applicant: Hanwha Corporation, Seoul 04541 (KR)
(72) Inventor: HONG, Ha Na, Seoul 04541 (KR); LEE, Jong Won, Seoul 04541 (KR)
(74) Representative: Gulde & Partner
(86) International application number: PCT/KR2022/000642
(87) International publication number: WO 2022/158790

(57) **Abstract**

A cooperative robot according to an embodiment is a cooperative robot including a driver, an arm, and a controller, wherein the arm includes a first plate, a connector arranged on one surface of the first plate and connecting the cooperative robot and the arm to each other, a second plate arranged to be spaced apart from the first plate in a first direction to have one surface facing another surface of the first plate, a loadcell arranged to be in contact with the other surface of the first plate and one surface of the second plate and measuring a load applied in the first direction to transmit the measured load to the controller, at least one support shaft arranged between the first plate and the second plate and extending in the first direction, and a grip gripping an object.

## Description

### TECHNICAL FIELD

The disclosure relates to a cooperative robot and a method for controlling the same, and more particularly, to a cooperative robot having an improved arm structure capable of measuring a load of an object in real time to change a payload, and accurately measuring a load to be measured, and a method for controlling the same.

### BACKGROUND ART

A cooperative robot or a cobot is a robot that interacts and collaborates with humans. A cooperative robot is common with an industrial robot in the related art in that they replace manpower, but the industrial robot in the related art performs tasks in places isolated from human contact, and on the contrary, the cooperative robot is different from that it performs tasks indoors or in places close to humans. Therefore, the cooperative robot includes a function of stopping an operation by sensing an external collision during the operation to prevent damaging external objects or causing injury to the human body.

A cooperative robot generally includes a collision relief function to minimize damage to an object or operator when a collision is sensed. A payload (an acceptable load) is set for each cooperative robot by considering a work place, characteristics, or the like, and an operation of the cooperative robot that has sensed a collision is affected by the set payload. However, when a payload of a cooperative robot is incorrectly set, the following problems may occur.

For example, when a payload is set higher than an actual work load, a distance that a cooperative robot, which has sensed a collision, moves in an opposite direction to a collision direction, that is, a stopping distance of the cooperative robot, increases. On the contrary, when a payload is set lower than an actual work load, acceleration generated when a cooperative robot moves at a high speed or a load difference generated when the cooperative robot picks up an object is recognized as a collision situation, and the cooperative robot may unnecessarily stop.

Also, a cooperative robot also receives loads and torques of various magnitudes and directions while operating. Accordingly, even when the cooperative robot wants to measure only a load applied in a particular direction, the cooperative robot may not be able to accurately measure the load due to loads and torques applied in other directions.

In addition, a loadcell frequently used to measure a load in a cooperative robot has a high risk of being damaged when a load is applied in a vertical direction other than a designated vertical direction or in a rotational direction.

The above-described background art is technical information that the inventor possessed for derivation of the disclosure or acquired during the derivation process of the disclosure, and cannot necessarily be said to be known art disclosed to the general public prior to filing the present invention.

### DESCRIPTION OF EMBODIMENTS

### TECHNICAL PROBLEM

The disclosure provides a cooperative robot having an improved arm structure capable of measuring a weight of an object in real time and reflecting the weight of the object in the cooperative robot to improve stability, and a method for controlling the same.

However, these objectives are examples, and objectives to be solved by the disclosure are not limited thereto.

### SOLUTION TO PROBLEM

A cooperative robot according to an embodiment is a cooperative robot including a driver, an arm, and a controller, wherein the arm includes a first plate, a connector arranged on one surface of the first plate and connecting the cooperative robot and the arm to each other, a second plate arranged to be spaced apart from the first plate in a first direction to have one surface facing another surface of the first plate, a loadcell arranged to be in contact with the other surface of the first plate and one surface of the second plate and measuring a load applied in the first direction to transmit the measured load to the controller, at least one support shaft arranged between the first plate and the second plate and extending in the first direction, and a grip gripping an object.

In the cooperative robot according to an embodiment, the support shaft may have one end portion fixed to the first plate and another end portion movably inserted into one side of the second plate.

In the cooperative robot according to an embodiment, the second plate may have a connection hole into which the other end portion of the support shaft is inserted, and the cooperative robot may further include a linear guide arranged in the connection hole to surround the other end portion of the support shaft and restricting a movement direction of the support shaft to the first direction.

The cooperative robot according to an embodiment may further include a damper arranged at the other end portion of the support shaft and restricting a movement distance of the support shaft in the first direction.

In the cooperative robot according to an embodiment, when a load of the object received from the loadcell is less than or equal to a preset payload, the controller may change the payload to the load of the object.

A method for controlling a cooperative robot according to an embodiment is a method for controlling a cooperative robot including a driver, an arm, and a controller, wherein the method includes sensing an object by the cooperative robot, controlling, by the controller, the driver to grip an object with the arm, measuring a load of the object by a loadcell comprised in the arm, determining, by the controller, whether the load of the object exceeds a preset payload, changing, by the controller, the payload to the load of the object when the load of the object is less than or equal to the preset payload, and releasing, by the controller, a grip of the arm gripping the object when the load of the object exceeds the preset payload.

Other aspects, features, and advantages other than those described above will become clear from the detailed description, claims, and drawings for carrying out the disclosure.

### ADVANTAGEOUS EFFECTS OF DISCLOSURE

A cooperative robot according to an embodiment and a method for controlling the cooperative robot may allow a support shaft of an arm to move in a predetermined direction in a direction of a load to be measured. Accordingly, the cooperative robot according to an embodiment and a method for controlling the cooperative robot may accurately measure a load applied in a direction to be measured even when loads and torques act in various directions.

A cooperative robot according to an embodiment and a method for controlling the cooperative robot may ensure operation stability of the cooperative robot by resetting a payload of the cooperative robot.

### BRIEF DESCRIPTION OF DRAWINGS

FIG. 1 schematically shows a configuration of a cooperative robot according to an embodiment;
FIG. 2 schematically shows a configuration of an arm according to an embodiment;
FIG. 3 shows an arm according to an embodiment;
FIG. 4 is an exploded perspective view of an arm according to an embodiment; and
FIG. 5 shows a method for controlling a cooperative robot according to an embodiment.

### BEST MODE

A cooperative robot according to an embodiment is a cooperative robot including a driver, an arm, and a controller, wherein the arm includes a first plate, a connector arranged on one surface of the first plate and connecting the cooperative robot and the arm to each other, a second plate arranged to be spaced apart from the first plate in a first direction to have one surface facing another surface of the first plate, a loadcell arranged to be in contact with the other surface of the first plate and one surface of the second plate and measuring a load applied in the first direction to transmit the measured load to the controller, at least one support shaft arranged between the first plate and the second plate and extending in the first direction, and a grip gripping an object.

### MODE OF DISCLOSURE

The disclosure may be embodied in many different forms and have various embodiments, and the disclosure is described more fully with reference to the accompanying drawings, in which particular embodiments are shown. However, this is not intended to limit the disclosure to particular modes of practice, and it is to be appreciated that all changes, equivalents, and substitutes that do not depart from the spirit and technical scope are encompassed in the disclosure. In the description of the disclosure, even when shown in different embodiments, like numerals in the drawings denote like elements.

Hereinafter, the disclosure will now be described more fully with reference to the accompanying drawings, and in the description with reference to the drawings, the same or corresponding components are assigned the same reference numerals, and redundant descriptions thereof are omitted.

In the following embodiments, while such terms as "first," "second," etc., may be used only to distinguish one component from another, such components must not be limited to the above terms.

In the following embodiments, an expression used in the singular encompasses the expression of the plural, unless it has a clearly different meaning in the context.

In the following embodiments, it is to be understood that the terms such as "including," "having," and "comprising" are intended to indicate the existence of the features or components, and are not intended to preclude the possibility that one or more other features or components may be added.

Sizes of components in the drawings may be exaggerated for convenience of explanation. In other words, since sizes and thicknesses of components in the drawings are arbitrarily illustrated for convenience of explanation, the disclosure is not limited thereto.

In the following examples, the x-axis, the y-axis and the z-axis are not limited to three axes of the rectangular coordinate system, and may be interpreted in a broader sense. For example, the x-axis, the y-axis, and the z-axis may be perpendicular to one another, or may represent different directions that are not perpendicular to one another.

When a certain embodiment may be implemented differently, a specific process order may be performed differently from the described order. For example, two consecutively described processes may be performed substantially at the same time or performed in an order opposite to the described order.

Terms used in the disclosure are only used to describe particular embodiments, and are not intended to limit the disclosure. In the disclosure, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

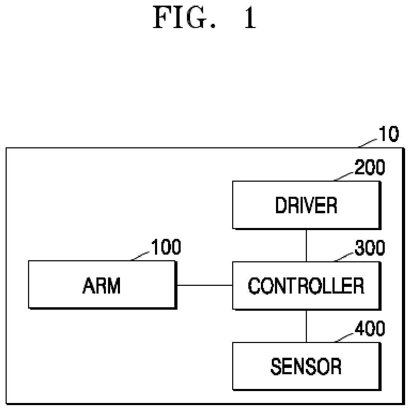

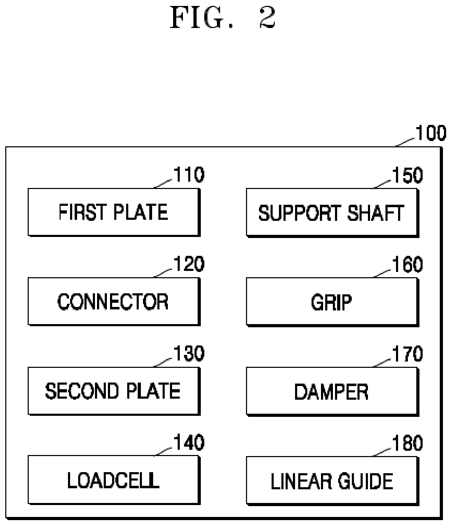

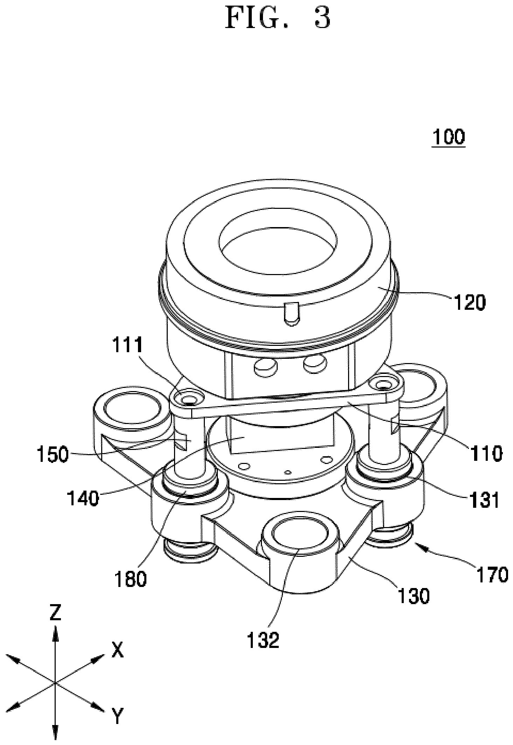

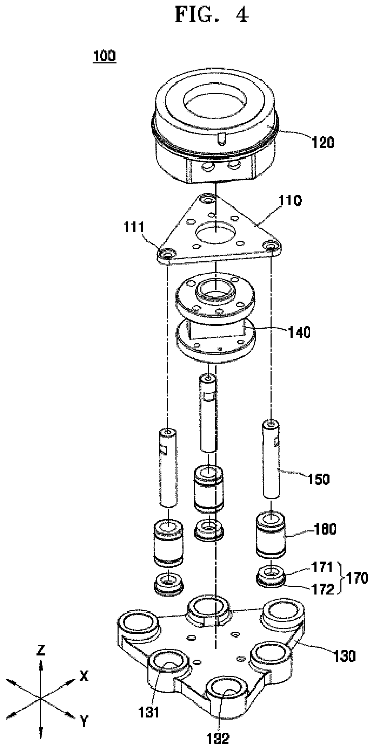

FIG. 1 schematically shows a configuration of a cooperative robot 10 according to an embodiment, FIG. 2 schematically shows a configuration of an arm 100 according to an embodiment, FIG. 3 shows the arm 100 according to an embodiment, and FIG. 4 is an exploded perspective view of the arm 100 according to an embodiment.

The cooperative robot 10 according to an embodiment is an industrial robot that satisfies cooperative operating conditions for working in the same space as a user. The cooperative robot 10 according to an embodiment may perform an operation of gripping an object to move the object to a particular location or assembling, loading, and packaging parts, an operation of inspecting an assembled article, a machine tending operation of inputting a processed article and taking out a finished product, or a polishing operation.

Referring to FIGS. 1 to 4, the cooperative robot 10 according to an embodiment includes the arm 100, a driver 200, a controller 300, and a sensor 400.

The arm 100 may be arranged on one side of the cooperative robot 10 to directly grip an object. The number or shape of the arm 100 is not particularly limited and may be appropriately selected according to an operation performed by the cooperative robot 10.

In an embodiment, the arm 100 may include a first plate 110, a connector 120, a second plate 130, a loadcell 140, a support shaft 150, a grip 160, a damper 170, and a linear guide 180. Also, although not illustrated in the drawings, the arm 100 may further include a housing or a case in which other components are arranged in an internal space to protect the components from external impact.

The first plate 110 is arranged on one side of the arm 100, support other members of the arm 100, and connect the other members to each other. For example, the connector 120 to be described below may be arranged on one surface of the first plate 110, and the loadcell 140 to be described below may be arranged on another surface of the first plate 110.

The shape of the first plate 110 is not particularly limited. For example, as shown in FIG. 3, the first plate 110 may be a triangular plate of which one surface and the other surface are flat, and corners are chamfered.

In an embodiment, the first plate 110 may have a first connection hole 111. For example, as shown in FIG. 3, at least one first connection hole 111 may be formed in the first plate 110. The support shaft 150 to be described below may be arranged in the first connection hole 111. For example, the first connection hole 111 may be arranged at each corner portion of the first plate 110.

The connector 120 may be arranged on one surface of the first plate 110 and is a portion where the arm 100 is coupled to the cooperative robot 10. For example, the connector 120 is connected to the driver 200 to be described below, and as the driver 200 operates, the arm 100 connected through the connector 120 may operate.

The second plate 130 may be arranged on another side of the arm 100, support other members of the arm 100, and connect the other members to each other. For example, the second plate 130 may be arranged to be spaced apart from the first plate 110 in a direction (e.g., a Z axis direction of FIG. 3) so that one surface thereof is parallel to another surface of the first plate 110. The loadcell 140 to be described below may be arranged on the one surface of the second plate 130, and the grip 160 to be described below may be connected to another surface of the second plate 130.

The shape of the second plate 130 is not particularly limited. For example, the second plate 130 may have a shape corresponding to the shape of the first plate 110. Alternatively, as shown in FIG. 3, the second plate 130 may be a triangular plate of which one surface and the other surface are flat, and corners are chamfered.

In an embodiment, the second plate 130 may have a second connection hole 131. For example, as shown in FIG. 3, at least one second connection hole 131 may be formed in the second plate 130. The support shaft 150 to be described below may be inserted into the second connection hole 131. For example, the second connection hole 131 may be arranged at each corner portion of the second plate 130. Also, the second connection hole 131 may be arranged to correspond to the first connection hole 111 of the first plate 110. For example, the second connection hole 131 may be arranged at a middle position of two adjacent corner portions of the second plate 130. That is, in a plan view, the first plate 110 and the second plate 130 may be arranged on the same axis, but may be arranged such that corner portions thereof are alternately arranged from each other.

In an embodiment, the second plate 130 may include a third connection hole 132. For example, as shown in FIG. 3, at least one third connection hole 132 may be formed at a corner portion of the second plate 130. The grip 160 to be described below or a connection portion thereof may be arranged in the third connection hole 132.

The loadcell 140 may be arranged between the first plate 110 and the second plate 130 and may measure a load applied while the cooperative robot 10 is operating. For example, as shown in FIG. 3, the loadcell 140 may be arranged to be in contact with the other surface of the first plate 110 and the one surface of the second plate 130, and may measure a load applied in the first direction. Also, the loadcell 140 may transmit the measured load to the controller 300.

The support shaft 150 is a member restricting a direction of a load applied to the loadcell 140, and at least one support shaft 150 may be arranged between the first plate 110 and the second plate 130.

In more particular, the cooperative robot performs various operations while gripping an object and receives loads and torques of various magnitudes and directions in this process. As a result, a load may not be accurately measured, such as a load received when the cooperative robot grips an object is offset, due to the loads and torques applied in other directions.

In the cooperative robot 10 according to an embodiment, the support shaft 150 is arranged between the first plate 110 and the second plate 130, on which the loadcell 140 is arranged, in the first direction, and thus a direction of a load applied during a process in which the cooperative robot 10 operates may be restricted.

In an embodiment, the support shaft 150 is a rod-shaped member extending in the first direction, wherein one end thereof may be connected to the first plate 110, and another end thereof may be connected to the second plate 130.

For example, as shown in FIGS. 3 and 4, the one end of the support shaft 150 may be inserted into the first connection hole 111 of the first plate 110, and the support shaft 150 may be maintained in a fixed state. Also, the other end of the support shaft 150 may be inserted into the second connection hole 131 of the second plate 130 to be movable in the first direction.

Accordingly, the first plate 110 is configured to be relatively movable with respect to the second plate 130, and the loadcell 140 arranged therebetween may measure a load. In particular, because a movement direction of the support shaft 150 is restricted to the first direction, even when the cooperative robot 10 receives loads and torques of various magnitudes and directions while operating, an effect thereof may be minimized. Therefore, the loadcell 140 may accurately measure a load applied in the first direction.

The number of support shafts 150 is not particularly limited, and it is sufficient as long as the support shafts 150 may maintain balance in a state arranged between the first plate 110 and the second plate 130. For example, as shown in FIG. 3, three support shafts 150 may be arranged at respective corner portions of the first plate 110.

In an embodiment, the linear guide 180 restricting the moving direction of the support shaft 150 to the first direction may be further included. For example, as shown in FIGS. 3 and 4, the linear guide 180 is a cylindrical member extending in the first direction, and may be arranged inside the second connection hole 131 of the second plate 130 to surround another end of the support shaft 150. The number of linear guides 180 is not particularly limited, and the linear guide 180 may be arranged at each support shaft 150.

Accordingly, direct contact of the support shaft 150 with the second plate 130 may be prevented, and the moving direction of the support shaft 150 may be more reliably guided in the first direction.

In an embodiment, the linear guide 180 may be fixed inside the second connection hole 131 of the second plate 130. Accordingly, the support shaft 150 may relatively move with respect to the fixed linear guide 180 in the first direction.

The grip 160 may be arranged on one side of the arm 100 to directly grip an object. Although not illustrated in FIGS. 3 and 4, the grip 160 may be arranged on the other surface of the second plate 130. The shape of the grip 160 is not particularly limited, and may be a tongs or a finger type, or may use a suction hole.

The damper 170 may prevent the support shaft 150 or the like from moving excessively when the cooperative robot 10 receives a load in the first direction, and may prevent damage caused by a momentarily large load being applied to the loadcell 140 or the support shaft 150. For example, the damper 170 may be arranged at another end portion of the support shaft 150, and may act as a buffer in an opposite direction when the support shaft 150 moves downward.

In an embodiment, the damper 170 may include an elastic member 171 and a stopper 172.

As shown in FIGS. 3 and 4, the elastic member 171 is a ring-shaped member, and may be arranged to surround an outer periphery surface of the other end portion of the support shaft 150. Also, the elastic member 171 may be arranged such that one surface thereof is in contact with the linear guide 180.

The type of the elastic member 171 is not particularly limited, and it is sufficient as long as it may provide a restoring force in an opposite direction when the support shaft 150 is compressed as moving downward. For example, the elastic member 171 may be a urethane damper or a spring damper.

The stopper 172 may be arranged at another end portion of the support shaft 150 so that the elastic member 171 is positioned between the linear guide 180 and the stopper 172. One surface of the stopper 172 may be in contact with the elastic member 171. Accordingly, when the support shaft 150 moves downward, the elastic member 171 may be compressed between the stopper 172 and the support shaft 150, and the support shaft 150 may not move excessively downward due to a restoring force of the elastic member 171.

The shape of the stopper 172 is not particularly limited, and may have a disk shape in contact with the other end of the support shaft 150. Also, the stopper 172 may have a larger outer diameter than that of the elastic member 171.

The driver 200 may be controlled by the controller 300 to drive the cooperative robot 10. For example, the driver 200 may drive the arm 100 to grip an object or release the gripping. Also, the driver 200 may move the cooperative robot 10 to a work place. The type and operating method of the driver 200 are not particularly limited. For example, the driver 200 may include a motor arranged on one side of the cooperative robot 10 and a wheel or slider connected to the motor.

The controller 300 controls the arm 100 and the driver 200 to perform an operation of the cooperative robot 10. The controller 300 may control the cooperative robot 10 through a preset program or may control the cooperative robot 10 by receiving an instruction input from the outside.

In an embodiment, when the sensor 400 to be described below senses an object, the controller 300 may control the driver 200 to move the cooperative robot 10 to the object. Also, the controller 300 may set a zero point of the loadcell 140. Here, the controller 300 may control the driver 200 to reflect an operation of the cooperative robot 10 gripping an object to set the zero point of the loadcell 140. This is to accurately measure a load applied to the loadcell 140 based on an operation of the cooperative robot 10 actually gripping an object because a load applied to the loadcell 140 may vary depending on a posture taken by the cooperative robot 10.

Next, the controller 300 may control the arm 100 and the driver 200 to grip the object, and then measure a load by using the loadcell 140. Also, the controller 300 determines whether a measured load exceeds a preset payload, for example, a maximum allowable payload. Here, the payload means a load received when the cooperative robot 10 operates while gripping an object, that is, an operating load, and the maximum allowable payload means a maximum operating load allowed by the cooperative robot 10. When a load measured by the loadcell 140 exceeds a maximum allowable payload, the controller 300 releases the grip of the arm 100 to return the object to its original position. Then, the controller 300 sets the zero point of the loadcell 140 and measures the load again.

When a load measured by the loadcell 140 is less than or equal to a maximum allowable payload, the controller 300 reflects the measured load to the payload. That is, the controller 300 may measure a load applied when the cooperative robot 10 performs an operation while actually gripping an object, and the load as a payload of the cooperative robot 10.

In an embodiment, the controller 300 may determine whether the arm 100 properly grips an object based on a load measured by the loadcell 140. For example, the controller 300 may determine that the arm 100 has failed to properly grip an object when a load exceeds or falls below a load range based on a predetermined load range. Also, the controller 300 may release the grip and then control the arm 100 to grip the object again.

The sensor 400 may be arranged on one side of the controller 300 to sense an object. The type of the sensor 400 is not particularly limited, and an optical sensor using a laser or the like or an ultrasonic sensor may be used. When the sensor 400 senses an object and transmits information about the location and size of the object to the controller 300, the controller 300 controls the arm 100 and the driver 200 to grip the object.

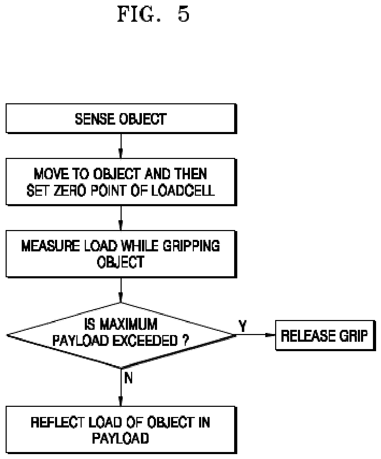

FIG. 5 shows a method for controlling a cooperative robot 10 according to an embodiment.

The method for controlling the cooperative robot 10 according to an embodiment is a method for controlling the cooperative robot 10 including the arm 100, the driver 200, and the controller 300, which may include an operation of the cooperative robot 10 gripping an object, an operation of the controller 300 to control the driver 200 to sense an object with the arm 100, an operation of measuring a load of the object by the loadcell 140 included in the arm 100, an operation of determining whether the load of the object exceeds a preset payload, an operation of the controller 300 changing a payload into the load of the object when the load of the object is less than or equal to the preset payload, and an operation of the controller 300 releasing the grip of the arm 100 gripping the object when the load of the object exceeds the preset payload.

First, the cooperative robot 10 senses an object by using the sensor 400. The sensor 400 senses an object by using laser or ultrasonic waves, and transmit the sensed object to the controller 300.

Then, the controller 300 controls the driver 200 to grip the object with the arm 100 based on information about the position and size of the object received from the sensor 400. For example, the controller 300 controls the driver 200 to move the cooperative robot 10 to a position for gripping an object, and then controls the arm 100 to grip the object.

In an embodiment, the controller 300 may further include setting a zero point of the loadcell 140. For example, the controller 300 may control the driver 200 in a state in which the cooperative robot 10 moves near the object to maintain a posture of the arm 100 gripping the object. Here, the arm 100 is in a state in which the object is not gripped, and may maintain a state in which the cooperative robot 10 actually grips the object. Also, the controller 300 may set the zero point of the loadcell 140 in this state and then control the arm 100 to grip the object. Accordingly, a load of the object may be more accurately measured based on a posture in which the cooperative robot 10 actually operates.

Next, the loadcell 140 included in the arm 100 measures a load of the object. As described above, the arm 100 may accurately measure a load applied in the first direction (for example, the Z axis direction of FIGS. 3 and 4) even when loads and torques are applied in various directions during a process in which the cooperative robot 10 operates.

Then, the controller 300 may determine whether the load of the object exceeds a preset payload. For example, the controller 300 may determine whether a load measured by the loadcell 140 exceeds a maximum allowable payload.

When the load of the object exceeds a preset payload, the controller 300 may determine that the object is too heavy or the operation of the cooperative robot 10 is incorrect, and release the grip of the arm 100 gripping the object.

When the load of the object is less than or equal to the preset payload, the controller 300 sets the measured load of the object as the payload. That is, the controller 300 changes the preset payload to the load of the object.

In an embodiment, the controller 300 may determine whether the arm 100 properly grips an object based on a load measured by the loadcell 140. For example, when a load measured when gripping an object after setting the zero point of the loadcell 140 exceeds or falls below a preset load range, the controller 300 may determine that the arm 100 has not properly gripped the object. Also, the controller 300 may release the grip and then control the arm 100 to grip the object again.

The cooperative robot 10 according to an embodiment and a method for controlling the cooperative robot 10 may allow the support shaft 150 of an arm 100 to move in a predetermined direction in a direction of a load to be measured. Accordingly, the cooperative robot 10 according to an embodiment and a method for controlling the cooperative robot 10 may accurately measure a load applied in a direction to be measured even when loads and torques act in various directions.

The cooperative robot 10 according to an embodiment and a method for controlling the cooperative robot 10 may ensure operation stability of the cooperative robot 10 by resetting a payload of the cooperative robot 10.

The disclosure has been described with reference to the embodiments shown in the drawings, but this is only an example. While the disclosure has been particularly shown and described with reference to embodiments thereof, it will be understood by those of ordinary skill in the art that various changes in form and details may be made therein without departing from the spirit and scope as defined by the following claims.

Particular technical details described in the embodiments are examples, and do not limit the technical scope of the embodiments. To briefly and clearly describe the description of the disclosure, descriptions of conventional general techniques and configurations may be omitted. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the disclosure unless the element is specifically described as "essential" or "critical".

The use of the terms "a", "an", "the" and similar referents in the context of describing the disclosure and claims are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Also, the steps of all methods described herein can be performed in any suitable order unless otherwise indicated herein or otherwise clearly contradicted by context. The disclosure is not limited to the described order of the steps. The use of any and all examples, or exemplary language (e.g., "such as") provided herein, is intended merely to better illuminate the disclosure and does not pose a limitation on the scope of the disclosure unless otherwise claimed. Numerous modifications and adaptations will be readily apparent to one of ordinary skill in the art without departing from the spirit and scope.

### INDUSTRIAL APPLICABILITY

The disclosure may be used in the cooperative robot industry.

## Claims

1. A cooperative robot comprising a driver, an arm, and a controller,
wherein the arm comprises:
a first plate;
a connector arranged on one surface of the first plate and connecting the cooperative robot and the arm to each other;
a second plate arranged to be spaced apart from the first plate in a first direction to have one surface facing another surface of the first plate;
a loadcell arranged to be in contact with the other surface of the first plate and one surface of the second plate and measuring a load applied in the first direction to transmit the measured load to the controller;
at least one support shaft arranged between the first plate and the second plate and extending in the first direction; and
a grip gripping an object.

2. The cooperative robot of claim 1, wherein the support shaft has one end portion fixed to the first plate and another end portion movably inserted into one side of the second plate.

3. The cooperative robot of claim 2, wherein the second plate has a connection hole into which the other end portion of the support shaft is inserted, and
the cooperative robot further comprises a linear guide arranged in the connection hole to surround the other end portion of the support shaft and restricting a movement direction of the support shaft to the first direction.

4. The cooperative robot of claim 2, further comprising a damper arranged at the other end portion of the support shaft and restricting a movement distance of the support shaft in the first direction.

5. The cooperative robot of claim 1, wherein, when a load of the object received from the loadcell is less than or equal to a preset payload, the controller changes the payload to the load of the object.

6. The cooperative robot of claim 1, wherein the controller sets a zero point of the loadcell based on a posture in which the cooperative robot grips the object.

7. A method for controlling a cooperative robot comprising a driver, an arm, and a controller, the method comprising:
sensing an object by the cooperative robot;
controlling, by the controller, the driver to grip an object with the arm;
measuring a load of the object by a loadcell comprised in the arm;
determining, by the controller, whether the load of the object exceeds a preset payload;
changing, by the controller, the payload to the load of the object when the load of the object is less than or equal to the preset payload; and
releasing, by the controller, a grip of the arm gripping the object when the load of the object exceeds the preset payload.

8. The method of claim 7, further comprising, before the gripping of the object, setting, by the controller, a zero point of the loadcell based on a posture in which the cooperative robot grips the object.

9. The method of claim 8, further comprising, after releasing the grip, measuring a load of the object by resetting the zero point of the loadcell.

10. The method of claim 7, further comprising, after the changing of the payload to the load of the object, when a load measured by the loadcell is out of a preset load range when the object is gripped, controlling, by the controller, the arm to grip the object again.
